# EUROPÄISCHE PATENTANMELDUNG

(11) **EP 4 052 868 A1**
(43) Veröffentlichungstag der Anmeldung: **07.09.2022**
(21) Anmeldenummer: 22152633.8
(22) Anmeldetag: 21.01.2022
(51) Int. Cl.: B25J 11/00, B23P 19/06

(54) **AUTOMATISCHES SCHRAUBSYSTEM ZUM VERBINDEN VON BAUTEILEN**

(30) Priorität: 07.10.2021 DE 102021126022; 15.02.2021 DE 102021103466
(71) Anmelder: Stöger Automation GmbH, 82549 Königsdorf (DE)
(72) Erfinder: Stöger, Lorenz, 82549 Königsdorf (DE); Kornelsen, Artur, 82515 Wolfratshausen (DE)
(74) Vertreter: Flosdorff, Jürgen

(57) **Zusammenfassung**

Das Schraubsystem zum Verbinden von Bauteilen (6, 122), für deren Schraubverbindung hohe Anpresskräfte erforderlich sind, mit einer Schraubeinheit (2, 102), die mit einem Gelenkarmroboter (1, 101) verbunden ist, wobei die Schraubeinheit (2, 102) einen Motor (5, 105) für den Drehantrieb, einen Aktuator für den Linearantrieb (106), ein Getriebe (132), eine Drehmomentwelle (125), eine Werkzeugaufnahme (13, 110) für ein Schraubwerkzeug (3, 111) und einen Zuführkopf (4, 112) enthält, dem Schrauben, vorzugsweise fließlochformende Schrauben, zugeführt werden, die während des Eindrehens in dem Zuführkopf (4, 112) gehalten sind, wobei die Werkzeugaufnahme (13, 110), das Schraubwerkzeug (3, 111) und der Zuführkopf (4,112) auf einer gemeinsamen Schraubachse angeordnet sind, wobei das Schraubsystem eine gelenkige Lagereinrichtung (9, 12, 120) aufweist, durch deren Verschwenken eine Auslenkung einer Roboterachse des Gelenkarmroboters (1, 101) infolge von Anpresskräften und eine daraus resultierende Schräglage der Schraubeinheit (2, 102) ausgleichbar ist.

## Beschreibung

Die Erfindung betrifft ein automatisches Schraubsystem zum Verbinden von Bauteilen, für deren Schraubverbindung hohe Anpresskräfte erforderlich sind. Bei einem derartigen System ist eine Schraubeinheit an einem Gelenkarmroboter montiert. Die Schraubeinheit enthält einen Motor für den Drehantrieb, einen Aktuator für den Linearantrieb, ein Getriebe, eine Drehmomentwelle, eine Werkzeugaufnahme für ein Schraubwerkzeug und einen Zuführkopf, dem automatisch Schrauben, vorzugsweise fließlochformende Schrauben, zugeführt werden, die während des Schraubvorgangs in Zentrierbacken des Zuführkopfs gehalten werden. Wenn es sich um selbstschneidende Schrauben handelt, für die kein Bohrloch vorhanden ist, sind die Anpresskräfte des Schraubwerkzeugs hoch, sie betragen beispielsweise ca. 3.000 N. Die Werkzeugaufnahme, das Schraubwerkzeug und der Zuführkopf liegen auf einer gemeinsamen Schraubachse.

Bei den automatischen Schraubsystemen dieser Art nimmt der Gelenkarmroboter infolge der großen Anpresskräfte, die von dem Schraubwerkzeug auf die Schrauben ausgeübt werden, hohe Kräfte auf, die zu einer Auslenkung der Roboterachsen führen können, mit der Folge einer Auslenkung und leichten Schiefstellung der Schraubeinheit. Diese Auslenkung bewirkt bei den bisher bekannten Schraubsystemen dieser Art einen Versatz des Zuführkopfs der Schraubeinheit, in dem die zu verarbeitende Schraube gehalten wird. Dabei entstehen hohe Querkräfte und Biegebelastungen, die dazu führen, dass die Schraube leicht schräg eingedreht wird. Beim Endanzug der Schraube kann es passieren, dass der Schraubenkopf nicht plan am Bauteil aufliegt und somit ein kleiner Spalt entsteht. Außerdem kann der Drehmomentwert der Verschraubung verfälscht werden, und der Schrauber kann einem erhöhten Verschleiß unterliegen.

Der vorliegenden Erfindung liegt die Aufgabe zugrunde, derartige Nachteile der bisher bekannten automatischen Schraubsysteme zu vermeiden und ein verbessertes System anzugeben, bei dem sichergestellt ist, dass auch bei Auftreten von hohen Anpresskräften beim Schraubvorgang die Schrauben ohne eine Schrägstellung eingeschraubt werden, ohne dass ein Spalt zwischen der Schraube und dem Bauteil am Ende des Schraubvorgangs entsteht.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht eine gelenkige Lagereinrichtung vor, durch deren Verschwenken eine Auslenkung einer Roboterachse des Gelenkarmroboters infolge von Anpresskräften und eine daraus resultierende Schräglage der Schraubeinheit ausgleichbar ist. Die gelenkige Lagereinrichtung bewirkt, dass der Zuführkopf der Schraubeinheit während des gesamten Schraubvorgangs im rechten Winkel zur Ebene des Bauteils gehalten ist, in das die Schraube eingedreht wird. Durch die gelenkige Lagereinrichtung verbleibt auch das Schraubwerkzeug, das während des Schraubvorgangs im Eingriff mit dem Angriffsmerkmal der Schraube steht, im wesentlichen in vertikaler Lage, so dass der Schraubvorgang ohne Querkräfte erfolgen kann.

Eine erfindungsgemäße Ausführungsform der Erfindung sieht vor, dass als gelenkige Lagereinrichtung die Werkzeugaufnahme des Schraubwerkzeugs und der Zuführkopf um Gelenke schwenkbar gelagert sind. Damit sind zwei zusätzliche Gelenke in die Schraubeinheit integriert, durch die der Zuführkopf und das Schraubwerkzeug beim Schraubvorgang auslenkbar sind.

Durch die gelenkige Lagerung des Zuführkopfs liegt dieser während des gesamten Schraubvorgangs plan auf dem Werkstück auf, obwohl die Schraubeinheit von dem Roboter infolge einer Auslenkung der Roboterachsen in eine Schräglage gebracht wird. Die Schrauben werden von dem Zuführkopf daher während des gesamten Schraubvorgangs im rechten Winkel zur Ebene des Bauteils gehalten, in das die Schraube eingedreht wird. Durch die gelenkige Lagerung der Werkzeugaufnahme mit dem Schraubwerkzeug verbleibt auch das Schraubwerkzeug, das während des Schraubvorgangs im Eingriff mit dem Angriffsmerkmal der Schraube steht, im wesentlichen in vertikaler Lage, da das Schraubwerkzeug Spiel in seiner Führung hat und zentrisch der Schraube nachlaufen kann, ohne dass Querkräfte entstehen, die Reibung verursachen könnten.

Somit wird die Schraube gerade, d.h. im rechten Winkel, zum Bauteil eingedreht, ohne dass ein Spalt zwischen der Schraube und dem Bauteil entsteht. Die Verschraubung erfolgt mit einem korrekten Drehmomentwert, und ein erhöhter Verschleiß an der Schraubeinheit ist vermieden.

In einer vorteilhaften Ausgestaltung der erfindungsgemäßen Ausführungsform ist vorgesehen, dass am oberen Ende der Werkzeugaufnahme ein balliger Außensechskant angeordnet ist, durch den die Werkzeugaufnahme um einen Winkel β auslenkbar ist. Anstelle des balligen Außensechskants kann auch ein anderes Element der Werkzeugaufnahme vorgesehen sein, das eine kleine Schwenkbewegung der Werkzeugaufnahme ermöglicht.

Weiter wird mit Vorteil vorgeschlagen, dass der Zuführkopf durch zwei koaxiale Lagerstifte um einen Winkel γ auslenkbar ist. Auch für dieses Gelenk sind andere Mittel einsetzbar, die eine kleine Auslenkung des Zuführkopfs ermöglichen.

Die leichte Kippstellung der Schraubeinheit durch die große Belastung der Roboterachsen des Gelenkarmroboters wird somit durch eine Auslenkung der Werkzeugaufnahme mit dem Schraubwerkzeug und der Auslenkung des Zuführkopfs ausgeglichen, so dass der Zuführkopf beim Schraubvorgang plan auf dem Bauteil aufliegt und die Schraube und das Schraubwerkzeug im wesentlichen in einem rechten Winkel zu dem Bauteil gehalten sind.

Nach einem weiteren Vorschlag der Erfindung kann das Schraubwerkzeug mit zwei Verjüngungen versehen sein, an denen sich das Schraubwerkzeug beim Schraubvorgang aus der Werkzeugführung im Zuführkopf bewegt.

Außerdem wird mit Vorteil vorgeschlagen, dass die Auslenkungen der Werkzeugaufnahme und des Zuführkopfs gegen die Kraft von Federn erfolgen, die die Auslenkungen nach Beendigung des Schraubvorgangs wieder zurück stellen.

Eine alternative Ausführungsform der Erfindung sieht als gelenkige Lagereinrichtung vor, dass die Schraubeinheit um ein Gelenk schwenkbar bzw. drehbar gelagert ist., das in der Schraubachse angeordnet ist, so dass eine Auslenkung einer Roboterachse des Gelenkarmroboters infolge von Anpresskräften und eine an sich daraus resultierende Schräglage der Schraubeinheit durch deren Verschwenken ausgleichbar ist, so dass die Schraubachse ihre senkrechte Lage zur Ebene der zu verbindenden Werkstücke beibehält. Durch diese gelenkige Lagerung der Schraubeinheit liegt der Zuführkopf während des gesamten Schraubvorgangs plan auf dem Werkstück, z.B. einem Blech, auf, während die Schraubeinheit so um das in der Schraubachse liegende Gelenk verschwenkt wird, dass die Schraubachse ihre senkrechte Lage zur Ebene der zu verbindenden Werkstücke beibehält. Dabei kann die Ebene der zu verbindenden Bauteile horizontal oder auch im Winkel zur Horizontalen angeordnet sein.

Mit besonderem Vorteil wird außerdem vorgeschlagen, dass bei dieser Ausführungsform der Erfindung an dem freien Arm des Gelenkarmroboters eine Adapterplatte befestigt ist, an der zwei voneinander beabstandete Seitenbleche bzw. Haltearme angesetzt sind, zwischen denen die Schraubeinheit über das Gelenk befestigt ist. Außerdem ist zwischen der Adapterplatte und der Schraubeinheit, vorzugsweise deren Zylinder für den Linearantrieb, eine Rückstellzylindereinheit angeordnet, die mit einem Festanschlag zusammenwirkt, um die nicht ausgelenkte Ausgangslage der Schraubeinheit und ihrer Schraubachse zu fixieren, bis der Schraubvorgang eingeleitet wird. Der Festanschlag kann an wenigstens einem der Seitenbleche ausgebildet sein, an den der Zylinder des Aktuators für den Linearantrieb von der Rückstellzylindereinheit angezogen wird, um die nicht ausgelenkte Ausgangslage der Schraubeinheit zu fixieren. Bei Deaktivierung des Rückstellzylinders ist die Schraubeinheit zur Verschwenkung frei gegeben.

Die Kolben/Zylindereinheit des Rückstellzylinders kann vorteilhafterweise pneumatisch betätigt werden, und zwar über ein in der zuführenden Druckluftleitung angeordnetes Ventil.

Das Gelenk für den Winkelausgleich kann vorteilhafterweise dadurch ausgebildet sein, dass zwei Bolzen an den gegenüberliegenden Seitenwänden des Zylinders für den Linearantrieb angebracht sind, die in Kugellager in den beiden Seitenblechen eingreifen. Hierdurch ist die gesamte Schraubeinheit um das Gelenk schwenkbar.

Der Fügevorgang, bei dem das Werkstück, in das eine Schraube eingebracht werden soll, fest eingespannt sein kann, läuft folgendermaßen ab:
1. Der Rückstellzylinder ist angesteuert, so dass ein Bestandteil der Schraubeinheit, vorzugsweise der Zylinder für den Linearantrieb/Werkzeughub, an dem Festanschlag anliegt.
2. Die Schraubeinheit setzt mit dem Zuführkopf auf dem Werkstück auf.
3. Der Rückstellzylinder wird über das Ventil deaktiviert (entlüftet).
4. Das Schraubwerkzeug fährt auf die Schraube, die sich im Zuführkopf befindet, auf und wird anschließend mit hoher Axialkraft beaufschlagt.
5. Durch die hohe Prozesskraft wird die Roboterachse um einen Winkel α5 ausgelenkt.
6. Die Auslenkung der Roboterachse wird durch das Gelenk in der Schraubachse ausgeglichen.
7. Der Schraubvorgang wird ausgeführt, wobei auf die Schraube und das Bauteil keine Querkräfte einwirken. Hierdurch werden
   a) Beschädigungen durch "Schieben" des Zuführkopfs auf dem Werkstück vermieden;
   b) das Drehmoment während der Verschraubung nicht "verfälscht", wodurch die Prozess-Sicherheit erhöht wird;
   c) die Schraube und das Schraubwerkzeug weniger belastet, wodurch die Standzeit erhöht wird;
   d) die Schraube wird gerade eingedreht, wodurch die Dichtigkeit der Schraubverbindung verbessert ist.
8. Nachdem die Schraube eingedreht ist, wird die Axialkraft des Schraubwerkzeugs zurück genommen und der Roboter geht in seine Ausgangsposition.
9. Der Rückstellzylinder wird wieder aktiviert (belüftet) und der Zylinder des Aktuators für den Linearantrieb liegt wieder am Festanschlag an.
10. Der Aktuator für den Linearantrieb wird zurückgesetzt und die Schraubeinheit hebt vom Werkstück ab.

Weitere Merkmale und Einzelheiten der Erfindung ergeben sich aus der nachfolgenden Beschreibung bevorzugter Ausführungsformen des Schraubsystems sowie anhand der Zeichnungen. Dabei zeigen:
- Figur 1: eine schematische Ansicht einer ersten Ausführungsform des erfindungsgemäßen automatischen Schraubsystems;
- Figur 2: eine Schraubeinheit in schematischer Darstellung
- Figur 3: die Schraubeinheit der Figur 2 ohne Winkelausgleich;
- Figur 4: die Schraubeinheit mit Winkelausgleich;
- Figur 5: einen schematischen Längsschnitt durch den Bereich des Gelenks des Zuführkopfs;
- Figur 6: eine schematische Seitenansicht des Bereichs der Figur 5;
- Figur 7: einen schematischen Längsschnitt durch den Bereich des oberen Gelenks;
- Figur 8: einen Vertikalschnitt durch die erste Ausführungsform der erfindungsgemäßen Schraubeinheit;
- Figur 9: das Gelenk in der Werkzeugaufnahme (Detail D);
- Figur 10: das Gelenk im Zuführkopf (Detail E und Schnitt H-H);
- Figur 11: die Werkzeugführung (Detail G);
- Figur 12: eine schematische Gesamtansicht einer zweiten Ausführungsform des automatischen Schraubsystems;
- Figur 13: die Schraubeinheit in der Grundstellung;
- Figur 14: die Schraubeinheit der Figur 13 beim Schraubprozess ohne Winkelausgleich;
- Figur 15: die Schraubeinheit mit Winkelausgleich;
- Figur 16: zwei verschiedene Ansichten der Schraubeinheit;
- Figur 17: einen Schnitt K-K durch die Seitenansicht der Figur 16;
- Figur 18: einen Schnitt L-L durch die Stirnansicht der Figur 16;
- Figur 19: den Aufbau der zweiten Ausführungsform des Schraubsystems.

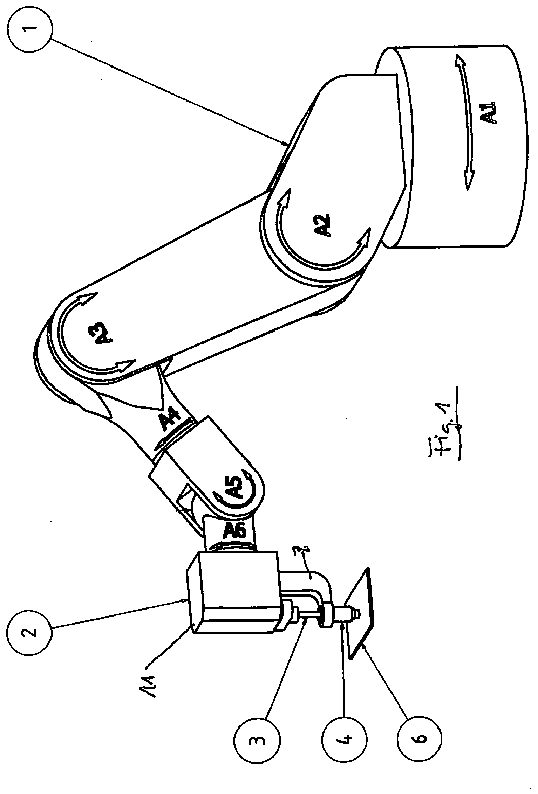

Figur 1 zeigt eine erste Ausführungsform des erfindungsgemäßen Schraubsystems zum Verbinden von Bauteilen. Das Schraubsystem enthält einen Gelenkarmroboter 1, dessen Arme A1 bis A6 in Richtung der dargestellten Pfeile drehbar sind. An dem vorderen Arm A6 ist eine Schraubeinheit 2 befestigt, in deren Gehäuse eine Antriebseinrichtung für ein Schraubwerkzeug 3 angeordnet ist. An dem Gehäuse 11 ist ein Halter 7 befestigt, an dessen freien Ende ein Zuführkopf 4 angebracht ist, dem durch einen nicht dargestellten Schlauch nacheinander Schrauben zugeführt werden, die in ein Bauteil 6 eingeschraubt werden. Die Schrauben sind während des Schraubvorgangs in dem Zuführkopf 4 so gehalten, dass ihre Längsachse mit der Mittellängsachse des Zuführkopfs 4 übereinstimmt.

Bei einem Fügevorgang mit fließloch-formenden Schrauben sind hohe Anpresskräfte erforderlich, die bei dem Gelenkarmroboter 1 eine Auslenkung der Roboterachsen hervorrufen können. Dies trifft bei der dargestellten Ausführungsform auf die Achse A5 zu. Diese Auslenkung bewirkt wiederum einen Versatz des Zuführkopfs 4, in dem die zu verarbeitende Schraube gehalten wird. Da die zu fügenden Bauteile 6 während der Bearbeitung fest fixiert sind, ist ein Ausgleich dieser Auslenkung ohne besondere technische Maßnahmen nicht möglich. So entstehen bei der dargestellten Ausführungsform hohe Querkräfte und Biegebelastungen in der Schraubeinheit sowie in der Fügestelle, die das Schraubergebnis negativ beeinflussen. Unter anderem resultiert hieraus eine Schiefstellung der Schraube, ein verfälschter Drehmomentwert bei der Verschraubung sowie ein erhöhter Verschleiß des Schraubwerkzeugs.

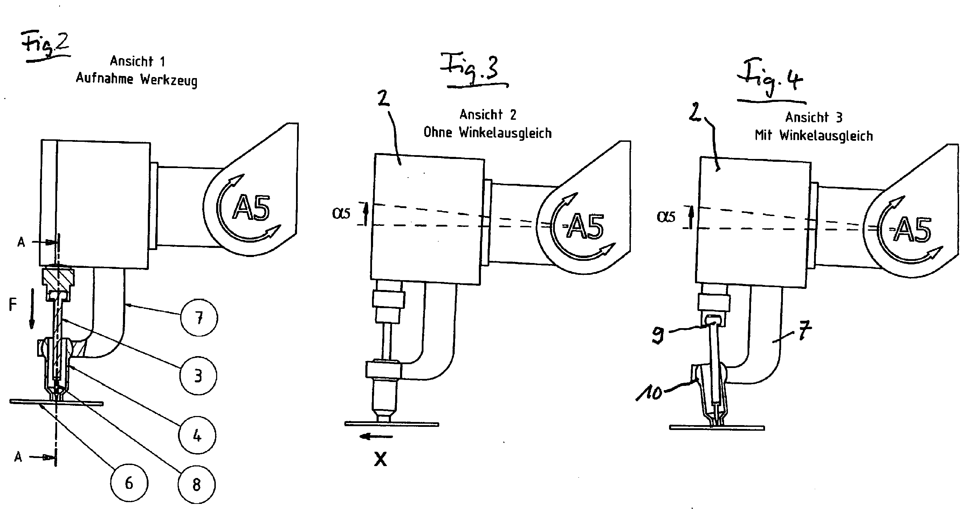

Figur 2 zeigt die an dem Gelenkroboter befestigte Schraubeinheit 2 in einer ähnlichen schematischen Darstellung, wobei der Zuführkopf 4 geschnitten dargestellt ist. Das Schraubwerkzeug 3 steht mit einer Schraube 8 in Eingriff, die in dem Zuführkopf 4 in vertikaler Lage gehalten ist. Beim Schraubvorgang wird eine beträchtliche Anpresskraft F auf die Schraube 8 ausgeübt.

Durch diese Anpresskraft wird die Schraubeinheit 2 um einen Winkel α5 in Richtung des Pfeils verschwenkt, wodurch an der Fügestelle eine Kraft X hervorgerufen wird, die ohne Mittel zum Winkelausgleich zu einer leichten Schrägstellung der Schraube beim Eindrehen führt.

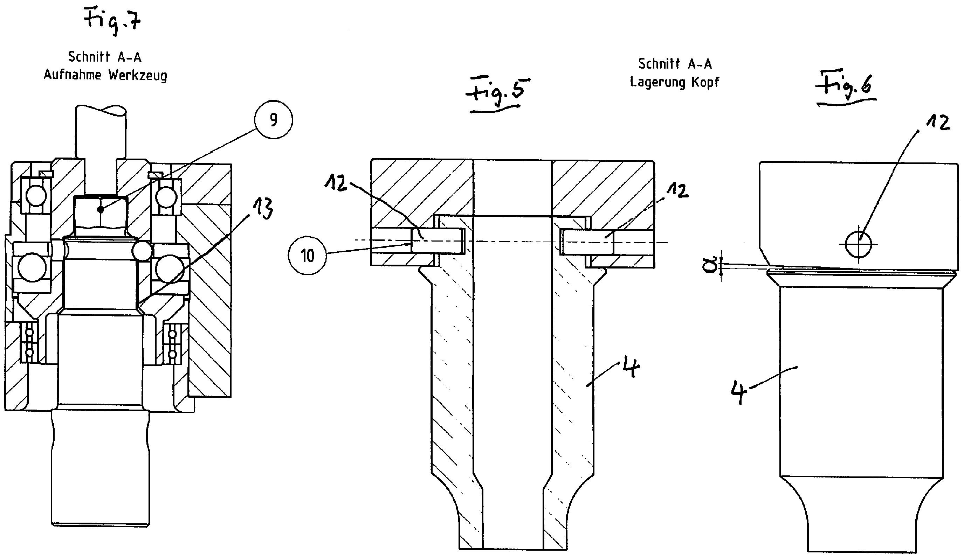

Um einen derartig fehlerhaften Schraubvorgang zu vermeiden, sind zwei zusätzliche Gelenke in die Schraubeinheit 2 integriert, durch die die Auslenkung des Roboters ausgeglichen werden kann. Das Gelenk oberhalb des Schraubwerkzeugs 3 ist bevorzugt ein balliger Sechskant 9, der eine Schwenkbewegung des Werkzeugs 3 zulässt, wie in der schematischen Figur 4 dargestellt ist. Außerdem ist der Zuführkopf 4 gelenkig an dem Halter 7 befestigt, wobei dieses Gelenk 10 aus zwei koaxialen, federbelasteten Zylinderstiften 12 besteht, wie Figur 5 rein schematisch zeigt. Durch diese gelenkige Lagerung des Mundstücks 4 kann dieses um einen Winkel α verschwenkt werden, wie Figur 6 zeigt, so dass bei einer Schrägstellung der Schraubeinheit 2 der Zuführkopf4 während des gesamten Schraubvorgangs plan auf dem Bauteil aufgesetzt werden kann und die Schraube senkrecht zu dem Bauteil eingeschraubt wird.

Figur 7 zeigt einen Schnitt A-A durch die Werkzeugaufnahme 13 des Schraubwerkzeugs 3. Am oberen Ende ist ein balliger Außensechskant 9 so gehalten, dass das Schraubwerkzeug 3, das im Eingriff mit einer Schraube steht, so verschwenkt wird, dass es beim Schraubvorgang der Schraube ohne Auftreten von Querkräften folgen kann. Während des Schraubvorgangs gibt das Schraubwerkzeug in den beiden Gelenken 9, 10 nach, so dass die Querkräfte eliminiert werden und die Qualität des Schraubvorgangs erheblich verbessert wird.

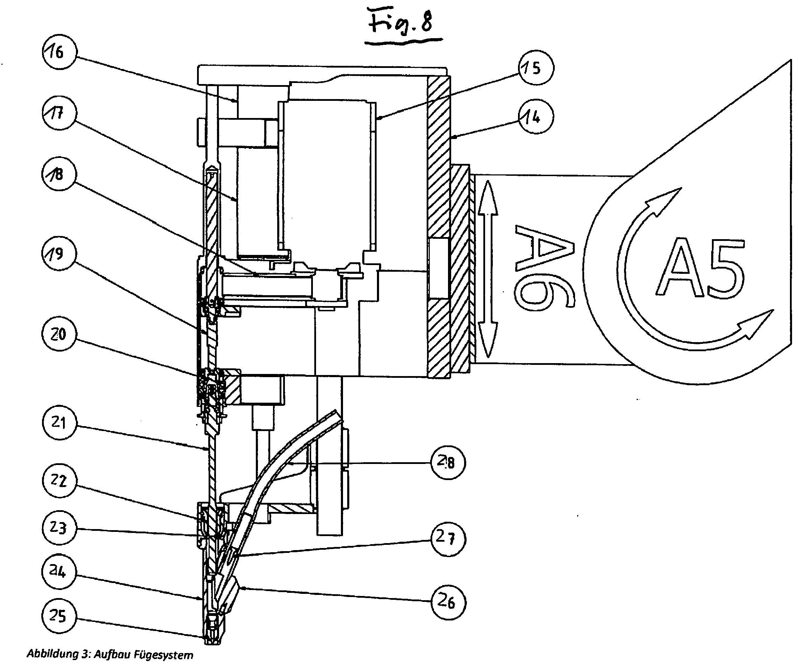

Figur 8 zeigt einen Vertikalschnitt durch eine erfindungsgemäße Ausführungsform einer Schraubeinheit, die durch eine Adapterplatte 14 an einem Gelenkarmroboter befestigt ist. Die wesentlichen Bauteile der

Schraubeinheit ergeben sich aus der folgenden Zusammenstellung unter Angabe der zugehörigen Bezugszeichen in Figur 8:
- 14: Adapterplatte
- 15: Motor
- 16: Aktuator Zustellhub
- 17: Aktuator Werkzeughub
- 18: Umlenkgetriebe
- 19: Drehmomentwelle
- 20: Werkzeugaufnahme
- 21: Werkzeug
- 22: Werkzeugführung
- 23: Rückstellfeder
- 24: Zuführkopf
- 25: Zentrierbacken
- 26: Zuführarm
- 27: Verbindungselement
- 28: Zuführschlauch

Der Prozessablauf des dargestellten Schraubsystems ist folgendermaßen:
Die Schraube wird über den Zuführschlauch 28 z.B. per Druckluft zugeführt und in den Zentrierbacken 25, die über eine Zugfeder oder einen pneumatischen Zylinder zusammengehalten werden, aufgehalten. Alternativ kann die Zuführung der Schrauben auch per "pick and place" oder über ein in das System integriertes Magazin erfolgen.

Nachdem das Schraubwerkzeug in das Angriffsmerkmal der Schraube eingegriffen und der Zuführkopf auf dem Bauteil aufgesetzt hat, wird die Prozesskraft (F) eingeleitet. Hierbei wird die Roboterachse um einen Winkel α ausgelenkt.

Die Auslenkung α der Achse 6wird in der Werkzeugaufnahme 13 mit Hilfe eines balligen Außensechskants um den Winkel β und im Zuführkopf 4 mit Hilfe zweier Lagerstifte 12 um den Winkel γ ausgeglichen. Das Werkzeug 3 ist hierbei mit zwei Verjüngungen versehen. Sobald die Schraube 8 in das Bauteil 6 eindringt, bewegt sich das Schraubwerkzeug 3 aus der Werkzeugführung 22 im Zuführkopf, wie aus DETAIL G zu ersehen ist. Biegebelastung und Reibung am Schraubwerkzeug 3 werden so eliminiert.

Sobald der Schraubvorgang abgeschlossen ist, wird der Zustellhub 16 und der Werkzeughub 17 wieder zurück gesetzt, und der Zuführkopf hebt von dem Bauteil ab. Dabei wird der Zuführkopf durch Rückstellfedern wieder in die Ausgangsposition gedrückt, und die nächste Schraube kann zugeführt werden.

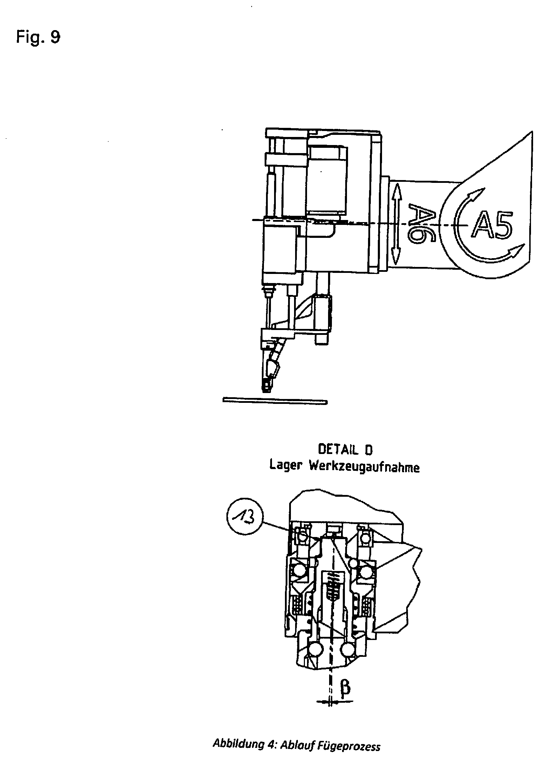

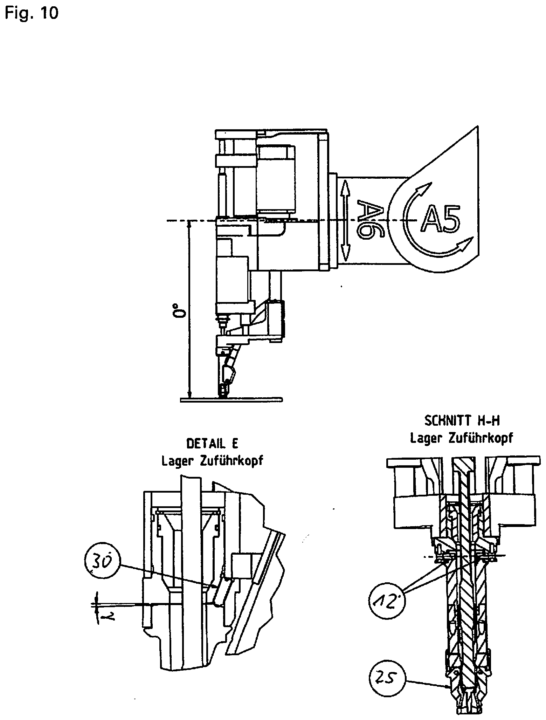

Um die Auslenkung in der Roboterachse auszugleichen, sind in die Schraubeinheit zwei zusätzliche Gelenke integriert. Figur 9 zeigt das Gelenk 9 in der Werkzeugaufnahme 13 als DETAIL D. Dieses Gelenk besteht aus einem vorzugsweise balligen Außensechskant 9. Das Gelenk im Zuführkopf ist in Figur 10 als DETAIL E und SCHNITT H-H dargestellt und enthält zwei Lagerstifte 12, um die der Zuführkopf 4 um einen Winkel γ schwenkbar ist. Das Bezugszeichen 25 bezeichnet die Zentrierbacken des Zuführkopfs, und das Bezugszeichen 30 bezeichnet eine Rückstellfeder, die nach Beendigung des Schraubvorgangs den Zuführkopf wieder in die Ausgangslage zurücksetzt.

Während des Schraubvorgangs kann die Schraubeinheit in diesen beiden Gelenken nachgeben. Hierdurch werden die Querkräfte eliminiert und das Werkzeug bleibt nahezu rechtwinklig zum Bauteil, wodurch die Qualität der Fügeverbindung erheblich verbessert wird.

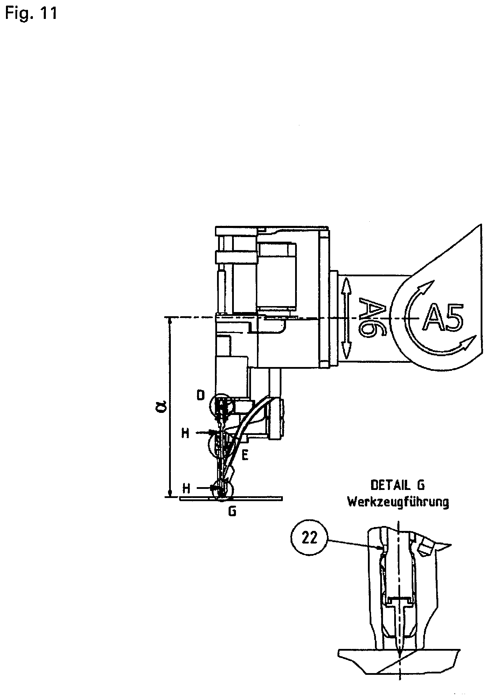

Figur 11 zeigt die Führung 22 des Schraubwerkzeugs, das mit zwei Verjüngungen versehen ist. Sobald die Schraube in das Bauteil eindringt, bewegt sich das Schraubwerkzeug aus der Werkzeugführung 22, wodurch Biegebelastung und Reibung am Werkzeug eliminiert sind.

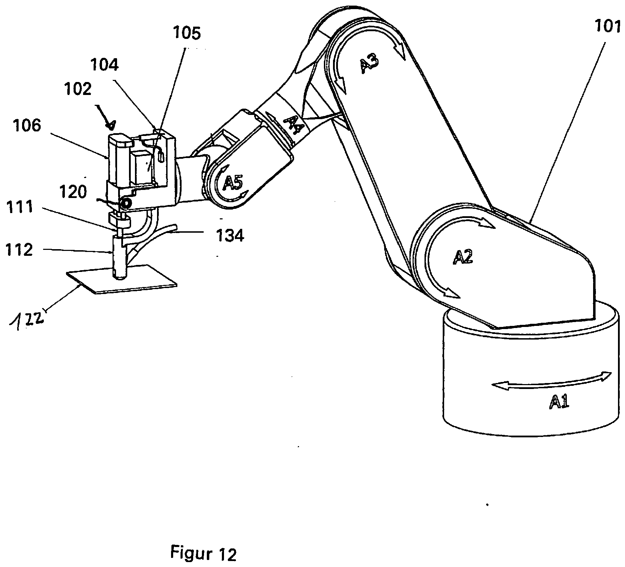

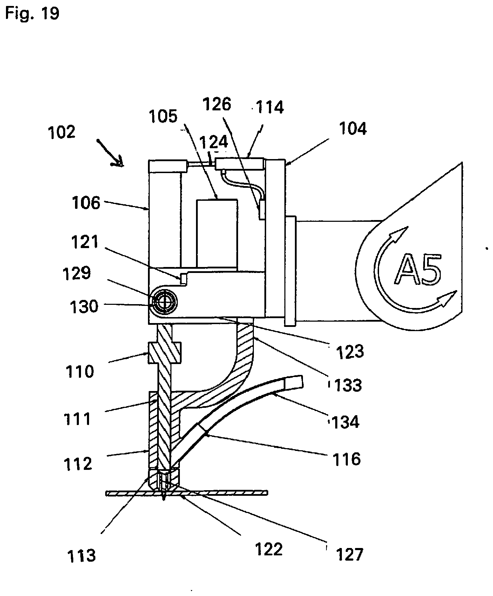

Die Figuren 12 und 19 zeigen eine zweite Ausführungsform des erfindungsgemäßen Schraubsystems zum Verbinden von Bauteilen. Das Schraubsystem enthält einen Gelenkarmroboter 101, dessen Arme A1 bis A5 in die Richtung der dargestellten Pfeile drehbar sind. Mit der vorderen Roboterachse ist eine Adapterplatte 104 verbunden, an deren unteren Endbereich zwei parallel voneinander beabstandete Seitenbleche 123 angebracht sind. Zwischen diesen Seitenblechen 123 ist eine Schraubeinheit 102 um ein Gelenk 120 schwenkbar befestigt. Die Schraubeinheit enthält einen Motor 105 für den Drehantrieb, einen Linearaktuator 106, eine Werkzeugaufnahme 110 für ein Schraubwerkzeug 111, einen Zuführkopf 112 mit Zentrierbacken 113. Die einzudrehenden Verbindungselemente bzw. Schrauben werden durch einen Zuführarm 116 dem Zuführkopf 112 zugeführt.

Am oberen Endbereich der Adapterplatte 104 ist ein Rückstellzylinder 114 befestigt, dessen Kolbenstange 124 fest mit dem Linearaktuator 106 verbunden ist. Druckluft zur Beaufschlagung des Rückstellzylinders 114 wird durch eine Leitung zugeführt, in die ein Ventil 126 eingeschaltet ist. An den Seitenblechen 123 ist ein Festanschlag 121 ausgebildet, gegen den der Linearaktuator 106 in der nicht verschwenkten Ausgangsstellung der Schraubeinheit 102 gezogen wird. Die von dem Motor 105 betätigte Drehmomentwelle 125, die Werkzeugaufnahme 110, das Schraubwerkzeug 111 und der Zuführkopf 112 mit dem Zentrierbacken 113 liegen auf einer gemeinsamen Schraubachse, die senkrecht zur Ebene des Werkstücks 122 verläuft. Das Gelenk 120 liegt ebenfalls in der Schraubachse. Die Schrauben 127 sind während des Schraubvorgangs in den Zentrierbacken 113 so gehalten, dass ihre Längsachse mit der Mittellängsachse des Zuführkopfs 112 übereinstimmt.

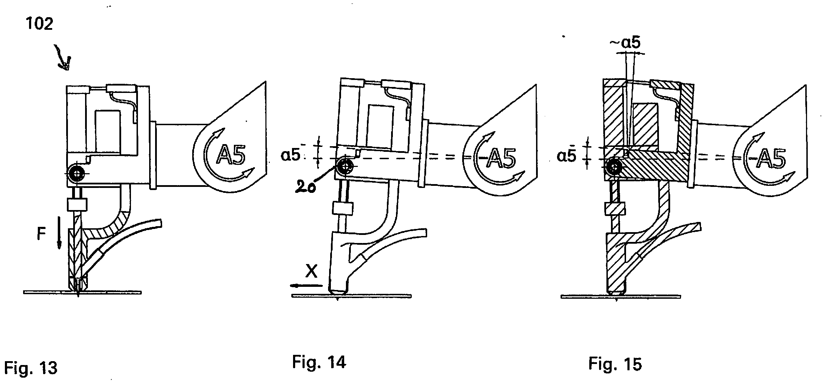

Figur 13 zeigt die an dem Gelenkroboter befestigte Schraubeinheit 102 in einer ähnlichen schematischen Darstellung, wobei der Zuführkopf 112 mit den Zentrierbacken 113 geschnitten dargestellt ist. Das Schraubwerkzeug 111 steht mit einer Schraube in Eingriff, die in den Zentrierbacken 113 in vertikaler Lage gehalten ist. Beim Schraubvorgang wird eine beträchtliche Anpresskraft F auf die Schraube ausgeübt.

Durch diese Anpresskraft wird die Schraubeinheit 102 um einen Winkel α5 in Richtung des Pfeils verschwenkt, wodurch an der Fügestelle eine Kraft X hervorgerufen wird, die ohne Mittel zum Winkelausgleich zu einer leichten Schrägstellung der Schraube beim Eindrehen führen würde (Figur 14).

Um einen derartig fehlerhaften Schraubvorgang zu vermeiden, ist die Schraubeinheit 102 mit den biegefest an der Adapterplatte 104 befestigten Seitenblechen 123 durch ein Gelenk 120 verbunden, das auf der Schraubachse der Schraubeinheit 102 liegt. Wenn der Rückstellzylinder 114 deaktiviert bzw. entlüftet ist, wird die Schraubeinheit 102, deren Zentrierbacken 113 fest gegen das Blech 122 gedrückt sind und deren Schraube mit hoher Axialkraft beaufschlagt ist, so um das Gelenk 120 verschwenkt, dass die Schraubachse ihre senkrechte Lage zur Ebene des Blechs 122 beibehält. Dieser Winkelausgleich ist in Figur 15 schematisch dargestellt.

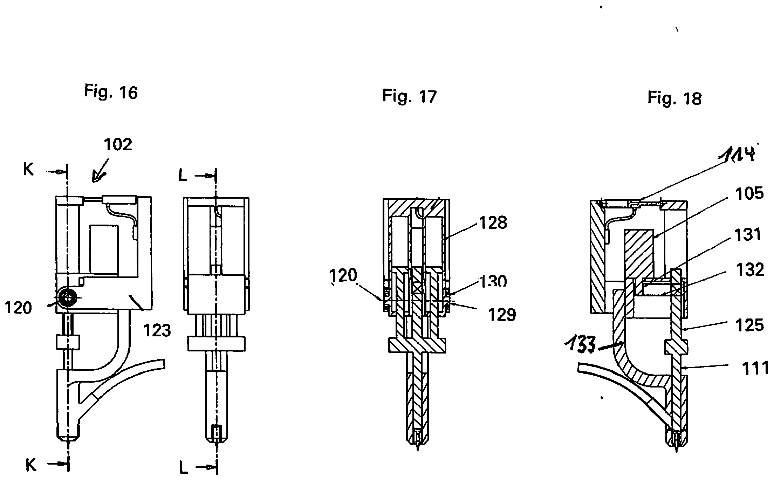

Figur 16 zeigt eine Seitenansicht und eine Stirnansicht der an den Seitenblechen 123 angelenkten Schraubeinheit 102. Der Zylinder 128 des Linearaktuators 106 ist an den gegenüberliegenden Außenseiten mit jeweils einem Bolzen 129 versehen, die in Kugellagern 130 sitzen, die in den Seitenblechen 123 angeordnet sind. Dies ist in näheren Einzelheiten in Figur 17 dargestellt, die einen Schnitt K-K in Figur 16 zeigt.

Figur 18 zeigt einen Schnitt L-L der Figur 16, aus der die gegenseitige Lage des Motors 105, seiner Antriebswelle 131, des Getriebes 132 und der Drehmomentwelle 125 mit dem Schraubwerkzeug 111 ersichtlich ist. Außerdem ist ein Halter 133 für den Zuführkopf 112 dargestellt.

Figur 19 zeigt den gesamten Aufbau der zweiten Ausführungsform des Schraubsystems, bei dem die Schrauben nacheinander durch einen Zuführschlauch 134 und den bereits erwähnten Zuführarm 116 den Zentrierbacken zugeführt werden, die über eine Zugfeder oder einen pneumatischen Zylinder zusammengehalten werden. Alternativ kann die Zuführung der Schrauben auch per "pick and place" oder über ein in das System integriertes Magazin erfolgen.

## Patentansprüche

1. Schraubsystem zum Verbinden von Bauteilen (6; 122), für deren Schraubverbindung hohe Anpresskräfte erforderlich sind, mit einer Schraubeinheit (2; 102), die mit einem Gelenkarmroboter (1; 101) verbunden ist, wobei die Schraubeinheit (2; 102) einen Motor (5; 105) für den Drehantrieb, einen Aktuator für den Linearantrieb (106), ein Getriebe (132), eine Drehmomentwelle (125), eine Werkzeugaufnahme (13; 110) für ein Schraubwerkzeug (3; 111) und einen Zuführkopf (4; 112) enthält, dem Schrauben (8), vorzugsweise fließlochformende Schrauben, zugeführt werden, die während des Eindrehens in dem Zuführkopf (4; 112) gehalten sind, wobei die Werkzeugaufnahme (13; 110), das Schraubwerkzeug (3; 111) und der Zuführkopf (4; 112) auf einer gemeinsamen Schraubachse angeordnet sind,
**gekennzeichnet durch**
eine gelenkige Lagereinrichtung (9, 12; 120), **durch** deren Verschwenken eine Auslenkung einer Roboterachse des Gelenkarmroboters (1; 101) infolge von Anpresskräften und eine daraus resultierende Schräglage der Schraubeinheit (2; 102) ausgleichbar ist.

2. Schraubsystem nach Anspruch 1,
**dadurch gekennzeichnet,**
**dass** als gelenkige Lagereinrichtung die Werkzeugaufnahme (13) des Schraubwerkzeugs und der Zuführkopf (4) um Gelenke (9, 12) schwenkbar gelagert sind, die so wirken, dass eine Auslenkung einer Roboterachse des Gelenkarmroboters (1) infolge der Anpresskräfte und eine daraus resultierende Schräglage der Schraubeinheit (2) durch Verschwenken der Werkzeugaufnahme (13) mit dem Schraubwerkzeug (3) und des Zuführkopfs (4) ausgleichbar ist, so dass diese ihre senkrechte Lage zur Ebene der zu verbindenden Teile (6) beibehalten.

3. Schraubsystem nach Anspruch 1 oder 2,
**dadurch gekennzeichnet,**
**dass** am oberen Ende der Werkzeugaufnahme (13) ein balliger Außensechskant (9) angeordnet ist, durch den die Werkzeugaufnahme (13) um einen Winkel (β) auslenkbar ist.

4. Schraubsystem nach einem der Ansprüche 1 bis 3,
**dadurch gekennzeichnet,**
**dass** der Zuführkopf (4) durch zwei koaxiale Lagerstifte (12) um einen Winkel (γ) auslenkbar ist.

5. Schraubsystem nach einem der Ansprüche 1 bis 4,
**dadurch gekennzeichnet,**
**dass** die Auslenkung (α) der Schraubeinheit (2) durch eine Auslenkung (β) der Werkzeugaufnahme (13) und Auslenkung (γ) des Zuführkopfs (4) ausgleichbar ist, so dass der Zuführkopf (4) beim Schraubvorgang plan auf dem Bauteil (6) aufliegt und die Schraube (8) und das Schraubwerkzeug (3) im wesentlichen im rechten Winkel zu dem Bauteil (6) gehalten sind.

6. Schraubsystem nach einem der Ansprüche 1 bis 5,
**dadurch gekennzeichnet,**
**dass** das Schraubwerkzeug (3) mit zwei Verjüngungen (22) versehen ist, an denen sich das Schraubwerkzeug (3) beim Schraubvorgang aus einer Werkzeugführung im Zuführkopf (4) bewegt, so dass Biegebelastung und Reibung am Schraubwerkzeug eliminiert sind.

7. Schraubsystem nach einem der Ansprüche 1 bis 6,
**dadurch gekennzeichnet,**
**dass** die Auslenkungen (β) der Werkzeugaufnahme (13) und des Zuführkopfs (4) durch die Kraft von Federn rückstellbar sind.

8. Schraubsystem nach Anspruch 1,
**dadurch gekennzeichnet,**
**dass** als gelenkige Lagereinrichtung die Schraubeinheit (102) um ein Gelenk (120) schwenkbar gelagert ist, das in der Schraubachse angeordnet ist und so wirkt, dass eine Auslenkung einer Roboterachse des Gelenkarmroboters (101) infolge von Anpresskräften und eine an sich daraus resultierende Schräglage der Schraubeinheit (102) durch Verschwenken der Schraubeinheit (102) ausgleichbar ist, so dass die Schraubachse ihre senkrechte Lage zur Ebene der zu verbindenden Bauteile (122) beibehält.

9. Schraubsystem nach Anspruch 1 oder 8,
**dadurch gekennzeichnet,**
**dass** an dem freien Arm des Gelenkarmroboters (101) eine Adapterplatte (104) befestigt ist, an der zwei voneinander beabstandete Seitenbleche (123) angesetzt sind, zwischen denen die Schraubeinheit (102) über das Gelenk (120) befestigt ist.

10. Schraubsystem nach einem der Ansprüche 1, 8 und 9,
**dadurch gekennzeichnet,**
**dass** zwischen der Adapterplatte (104) und der Schraubeinheit (102) eine Kolben/Zylindereinheit als Rückstellzylinder (114) angeordnet ist, der mit einem Festanschlag (121) an wenigstens einem der Seitenbleche (123) zusammenwirken kann, um die nicht ausgelenkte Ausgangslage der Schraubeinheit (102) und ihrer Schraubachse zu fixieren.

11. Schraubsystem nach einem der Ansprüche 1 und 8 bis 10,
**dadurch gekennzeichnet,**
**dass** die Kolben/Zylindereinheit an der Adapterplatte (104) und dem Zylinder (128) des Linearantriebs (106) angebracht ist, und
**dass** der Festanschlag (121) die nicht ausgelenkte Ausgangslage des Zylinders (128) des Linearantriebs (106) fixiert, wenn der Zylinder (128) gegen den Festanschlag (121) gezogen wird.

12. Schraubsystem nach einem der Ansprüche 1 und 8 bis 11,
**dadurch gekennzeichnet,**
**dass** bei deaktiviertem Rückstellzylinder (114) die Schraubeinheit (102) um das Gelenk (120) schwenkbar ist.

13. Schraubsystem nach einem der Ansprüche 1 und 8 bis 12,
**dadurch gekennzeichnet,**
**dass** der Rückstellzylinder (114) zu seiner pneumatischen Betätigung mit einem Ventil (126) versehen ist.

14. Schraubsystem nach einem der Ansprüche 1 und 8 bis 13,
**dadurch gekennzeichnet,**
**dass** an den gegenüberliegenden Außenseiten des Zylinders (128) des Linearantriebs (106) jeweils ein Bolzen (129) absteht, und dass die Bolzen (129) in Kugellager (130) eingreifen, die in den Seitenblechen (123) ausgebildet sind, wodurch die Schraubeneinheit (102) gelenkig gelagert ist.
